# EUROPÄISCHE PATENTSCHRIFT

(11) **EP 0 664 099 B1**
(45) Veröffentlichungstag und Bekanntmachung des Hinweises auf die Patenterteilung: **22.04.1998**
(21) Anmeldenummer: 95100179.1
(22) Anmeldetag: 09.01.1995
(51) Int. Cl.: A47J 36/00

(54) **Kochgefäss**
Cooking vessel
Récipient de cuisson

(30) Priorität: 24.01.1994 DE 9401119 U
(43) Veröffentlichungstag der Anmeldung: 26.07.1995
(73) Patentinhaber: KRECK EDELSTAHL GMBH, D-35708 Haiger-Weidelbach (DE)
(72) Erfinder: Pulfrich, Horst, Dipl.-Ing., D-35708 Haiger (DE)
(74) Vertreter: Missling, Arne, Dipl.-Ing.

(56) Entgegenhaltungen:
- WO-A-90/09133
- DE-A- 3 142 469
- DE-A- 4 121 706
- DE-U- 9 216 232
- GB-A- 112 031

## Beschreibung

Die Erfindung betrifft ein Kochgefäß mit einem Deckel, wobei das Kochgefäß aus einem Gefäßboden und einer Gefäßwandung besteht, die deckelseitig in einem Schüttrand endet, an welchen ein Deckelrand des Deckels anschlagend anlegbar ist, und mit einem Deckelgriff, wobei der Deckel an der Gefäßwandung aus einer das Kochgefäß abschließenden Schließstellung in eine der Trennung flüssigen Kochgutes von festem Kochgut und/oder der Entlüftung des Kochgefäßes dienende Öffnungsstellung von begrenztem Strömungsquerschnitt drehbar ist und der Deckelrand aus einem Ringanschlag für das Anschlagen an dem Schüttrand und einem den Deckel berandenden hohlzylindrischen Ringrand besteht, dessen Außenkontur an der Innenkontur der Gefäßwandung in einem an den Schüttrand anschließenden Randbereich der Gefäßwandung mit Spiel geführt ist, wenn der Deckel auf das Kochgefäß aufgesetzt ist.

Ein solches Kochgefäß ist demzufolge dazu geeignet, bei nur wenig geöffnetem Deckel die flüssigen Bestandteile des Kochgutes unter Rückhalt des übrigen Kochgutes auszuschütten und während des Kochvorganges für den Abzug von Wrasen und Druckausgleich mit der Umgebung zu sorgen.

Aus der Deutschen Patentschrift DE 39 05 002 C2 ist es in diesem Zusammenhang bereits bekannt, in der Gefäßwandung an den Schüttrand anschließend eine umlaufende Kragenfläche vorzusehen, deren Kragenhöhe variabel ist und auf diese Weise verdeckte Schütt- und Entlüftungsöffnungen ausbildet. Eine derartige, die Symmetrie des Kochgefäßes verletzende Ausgestaltung und die entsprechende Ausformung des Deckels erfordert schwierig herzustellende Umform-Werkzeuge und hat außerdem den Nachteil, daß der zylindrische Bereich der Gefäßwandung nicht durchweg bis zum Schüttrand reicht und die Gestaltung des Gefäßgriffes darauf Rücksicht nehmen muß.

In einer Anordnung entsprechend dem Deutschen Gebrauchsmuster DE 92 16 232 U1 sind die Anlageflächen von Deckel und Kochgefäß jeweils als Nocken in Form von örtlichen Erhebungen und Vertiefungen angebracht, die in einfacher Weise beim Verdrehen des Deckels zu dessen Längsverschiebung in Richtung der Symmetrieachse des Kochgefäßes führen. Die Nocken sind dabei stets erheblichen Beanspruchungen ausgesetzt, die im Laufe der Zeit zu Schäden führen können; sie stören auch bei der Säuberung des Kochgefäßes; dort verbliebene Lebensmittelreste können zu mangelnder Hygiene führen.

Es ist aus der englischen Patentschrift 112,031 auch bereits bekannt, an der Gefäßwand ortsfeste, parallel zu der Symmetrieachse des Kochgefäßes schwingende Kurvaturen anzubringen, an denen ein an dem Deckel ortsfestes Kurvenelement abläuft, wenn dieser um die Symmetrieachse gedreht wird, so daß der Deckel dabei in Richtung der Symmetrieachse verschoben wird. Die Anordnung erfordert einen erheblichen Aufwand an Bauelementen, die teilweise an der Gefäßwand, teilweise an dem Deckel befestigt werden müssen, Angriffspunkte für Korrosion bieten und erhebliche Probleme bei deren Säuberung bereiten können. Der Deckel kann auch nicht abgekippt werden, sondern ist nur axial verschiebbar.

Die Erfindung hat sich die Aufgabe gestellt, ein Kochgefäß der eingangs näher bezeichneten Art so auszubilden, daß es leicht herstellbar ist und die Gefäßwandung und der Deckel aus ungestörten, einfachen geometrischen Flächen bestehen, die leicht und sicher reinigbar sind und daß der Deckel bei erhitztem Kochgefäß von dem Betreiber leicht an dem Gefäßrand abkippbar ist, ohne daß er von dem Kochgefäß abgehoben werden müßte

Erfindungsgemäß wird die Aufgabe dadurch gelöst, daß der Deckelgriff sich an zwei gegenüberliegenden Seiten des Deckels bis in den Bereich des Deckelrandes erstreckt, so daß im Bereich des Deckelrandes ausgebildete Stirnseiten des Deckelgriffes an je einem Gefäßgriff anliegen, wenn der Deckel auf das Kochgefäß aufgelegt ist, und daß die Stirnseiten des Deckelgriffes und/oder der jeweilige an einer der Stirnseiten anliegende Bereich des Gefäßgriffes jeweils eine Kurvatur aufweisen, die in einem von der Symmetrieachse des Kochgefäßes festen Abstand verläuft und so ausgebildet ist, daß der Deckel bei einer Drehung um die Symmetrieachse in deren Richtung verschoben wird, wobei an dem Deckelgriff Griffelemente oder dergleichen für eine Verdrehung des Deckels so vorgesehen sind, daß dieser dabei von dem Deckelrand abkippt.

Gemäß der Erfindung ist nun der gesamte Mechanismus, der für die Beförderung des Deckels in dessen Öffnungs- oder Schließstellung bei seiner an der Gefäßwandung stattfindenden Verdrehung erforderlich ist, aus den metallenen Hauptteilen des Kochgefäßes in die Griffe gelegt worden, die üblicherweise aus einem Kunststoff bestehen und jedenfalls in einem Formwerkzeug jeweils bequem in großen Stückzahlen herstellbar sind; ein solches Formwerkzeug verlangt nur einen geringen Aufwand für die Ausbildung der erforderlichen Kurvaturen, welche einfach Begrenzungen an den Griffen darstellen, die ohnehin vorhanden sind. Auch die erforderlichen Griffelemente sind gleich an dem Deckelgriff vorgesehen und sichern bei der Verwendung von Kunststoff die ungefährliche Verkippung des Deckels.

Die Kurvaturen sind besonders einfach herstellbar, wenn sie konkav und/oder konvex gekrümmt ausgebildet sind in der Weise, daß der Ringanschlag an dem Schüttrand anschlägt, wenn die Stirnseite des Deckelgriffes mittig an dem zugehörigen Gefäßgriff anliegt. Eine solche Anordnung ist darüberhinaus vorteilhaft, weil sie eine gewissermaßen stabile Schließstellung ausbildet, aus der der Deckel nur gegen seine Schwerkraft bewegbar ist; die Schließstellung wird auch optisch signalisiert durch die symmetrische Zuordnung der Stirnseite des Deckelgriffes zu einem Gefäßgriff.

Die Öffnungsstellung ist in einfacher Weise dadurch definierbar, daß die Kurvaturen mit einer Rastung versehen sind, die bei einer Verdrehung des Deckels aus seiner Schließstellung in seine Öffnungsstellung wirksam wird. Im einzelnen ist es dabei vorteilhaft, wenn die konkave Kurvatur eine Rastkerbe aufweist und die konvexe Kurvatur von einer Rastkante berandet ist, die zusammen die Rastung bilden. Eine bereits nahegelegte symmetrische Ausbildung der Griffe sorgt im übrigen dafür, daß dabei eine Rastung in beiden aus der Schließstellung herausführenden Drehrichtungen erfolgt, gleichgültig, wie die Kurvaturen auf die Griffe verteilt worden sind.

Besonders zweckmäßig ist es, wenn die Kurvaturen einen in Drehrichtung des Deckels keilförmigen bzw. dazu passenden rillenförmigen Querschnitt aufweisen. Auf diese Weise ist der Platzbedarf für die Kurvaturen an beiden Griffen gering, und die Kurvaturen unterstützen die Zentrierung des Deckels auf der Gefäßwandung, insbesondere während dessen Verdrehung.

In naheliegender Weise können zwei an der Gefäßwandung gegenüberliegende Gefäßgriffe vorgesehen sein, an denen je eine Stirnseite des Deckelgriffes anlegbar ist. In jedem Fall ist es aber günstig, wenn die Griffelemente als Griffmulden ausgebildet und so vorgesehen sind, daß eine solche Griffmulde von einer Bedienungsperson mit dem Daumen einer einen der Gefäßgriffe fassenden Hand bequem erreichbar ist. Auf diese Weise kann der Deckel jederzeit ohne Hilfsmittel wie Topflappen oder dergleichen gegenüber dem Kochgefäß verdreht werden, wenn die Griffe wie üblich aus einem schlecht wärmeleitendem Kunststoff bestehen.

Eine besonders vorteilhafte Ausführung ergibt sich, wenn die Griffmulden außermittig zu der Symmetrieachse so vorgesehen sind, daß bei ihrer Betätigung dem Deckel ein Kippmoment eingeprägt wird in der Weise, daß auf der der Bedienungsperson zugewandten Seite des Kochgefäßes der Ringanschlag in Kontakt mit dem Schüttrand verbleibt. Die gewünschte Schütt- und Entlüftungsöffnung stellt sich demzufolge ganz zwanglos immer auf der von der Bedienungsperson abgewandten Seite des Kochgefäßes ein; eine Verwechselung ist dabei wegen der körperlichen Gegebenheiten nicht möglich.

Insgesamt vermeidet das erfindungsgemäße Kochgefäß die Nachteile des Standes der Technik in überraschend einfacher und kostengünstiger Weise und verbindet darüberhinaus eine manuell optimale Betätigung mit der Möglichkeit einer formschönen Gestaltung; die Erfindung ist deshalb gerade bei in großer Stückzahl erforderlichen Küchengeräten mit Erfolg anwendbar.

Weitere Vorteile und die Einzelheiten der Erfindung werden nachstehend an Hand der Zeichnung an einem Ausführungsbeispiel näher erläutert. Es zeigen
- Fig. 1: die Vorderansicht eines erfindungsgemäßen Kochgefäßes in seiner Schließstellung, teilweise geschnitten,
- Fig. 2: eine Seitenansicht und
- Fig. 3: eine Draufsicht zu Fig. 1,
- Fig. 4: eine Seitenansicht wie in Fig. 2, jedoch in der Öffnungsstellung des Kochgefäßes und
- Fig. 5: eine Seitenansicht wie in Fig. 4, jedoch teilweise geschnitten.

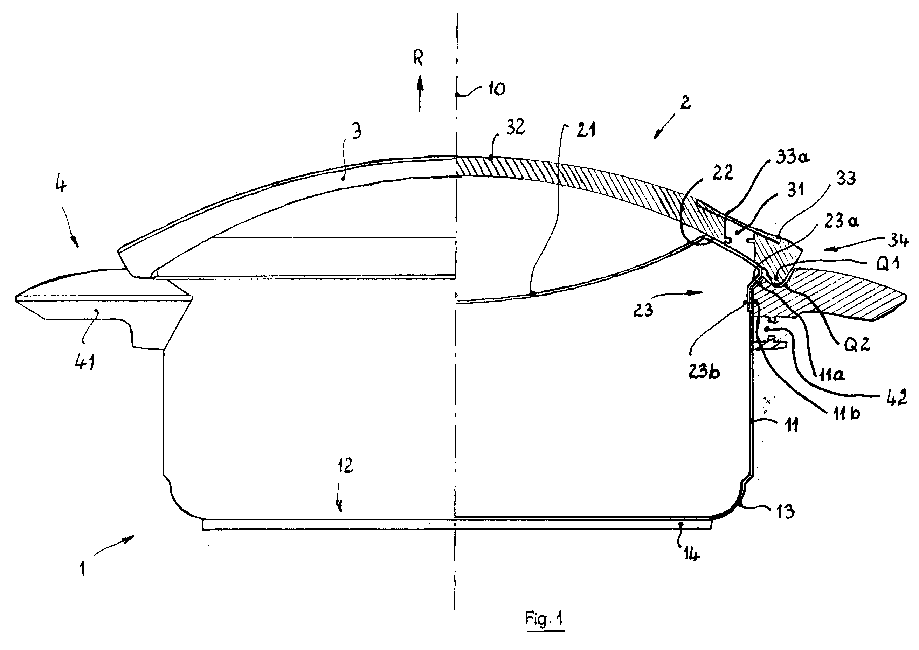

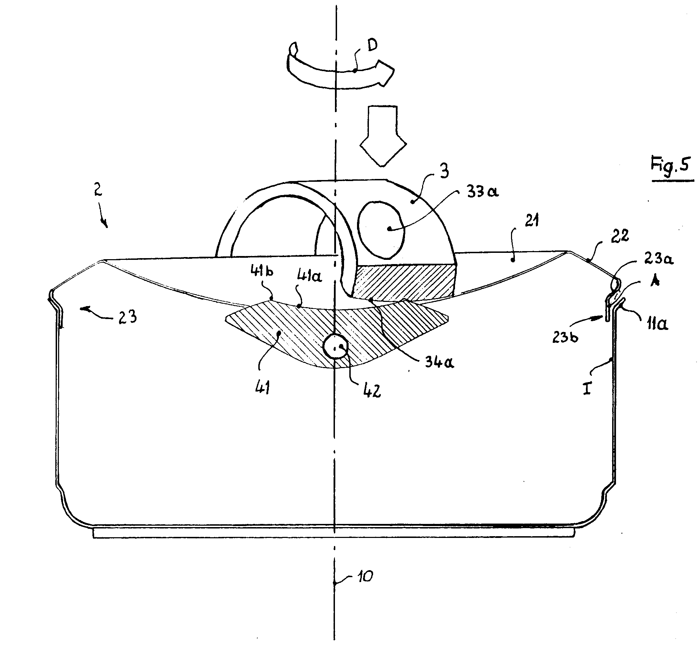

Ein kreiszylindrisches Kochgefäß 1 entsprechend der Erfindung besteht in bekannter Weise aus einer Gefäßwandung 11 und einem mit diesem verbundenen Gefäßboden 12, hier an die Gefäßwandung 11 mit einer Rundung 13 angebunden. Der Gefäßboden 12 ist mit einer dem Wärmeübergang dienenden und wärmespeichernden Bodenplatte 14 verstärkt. Besonders in Fig. 1 und Fig. 5 ist die Gestaltung der oberen Berandung der Gefäßwandung 11 gut zu erkennen, die im wesentlichen von einem Schüttrand 11a gebildet wird, hier als schräg nach oben ragende, ringförmige Abkantung gleicher Breite ausgeführt. Eine solche Konstruktion dient auch der Zentrierung eines Deckels 2.

Der Deckel 2 besteht im wesentlichen, wie ebenfalls vor allem in Fig. 1 und Fig. 5 zu erkennen ist, aus einer zentralen, zum Inneren des Kochgefäßes 1 hin gewölbten Deckelschale 21, an der ein umlaufender Halterand 22 für einen in Gegenrichtung der Deckelschale 21 gewölbten, schmalen Deckelgriff 3 angeschlossen ist. Der Halterand 22 geht in einen Deckelrand 23 über, der aus einem von dem Halterand 22 abgekanteten Ringanschlag 23a und einem hohlkreiszylindrischen Ringrand 23b besteht, dessen Außenkontur A zusammen mit einer Innenkontur I eines an den Schüttrand 11a anschließenden Randbereiches 11b der Gefäßwandung 11 eine Führung des Deckels 2 in einer zu einer Symmetrieachse 10 des Kochgefäßes 1 parallelen Richtung R dient.

An der Gefäßwandung 11 sind zwei gegenüberliegend angebrachte Gefäßgriffe 4 starr befestigt, mit einem Haltestück 41 jeweils bis an den Schüttrand 11a reichend. Die Art der Befestigung ist beliebig; eine Ausnehmung 42 in den Gefäßgriffen 4 deutet an, daß diese mit in der Zeichnung weggelassenen, auf der Gefäßwandung 11 durch Punktschweißung fixierten Haltebolzen verschraubbar sein können. Die Einzelheiten einer solchen Befestigung sind weitgehend beliebig und stehen nicht in unmittelbarem Zusammenhang mit der Erfindung, so daß auf eine weitere Erörterung verzichtet werden kann. Das gleiche gilt für die Befestigung des Deckelgriffes 3 an dem Deckel 2; die Stellen einer solchen Befestigung sind durch Ausnehmungen 31 (Fig. 1) bezeichnet; sie sind auf der von dem Deckel 2 abgewandten Seite 32 des Deckelgriffes 3 von einem mit einer Griffmulde 33a versehene Abdeckblech 33 verschlossen.

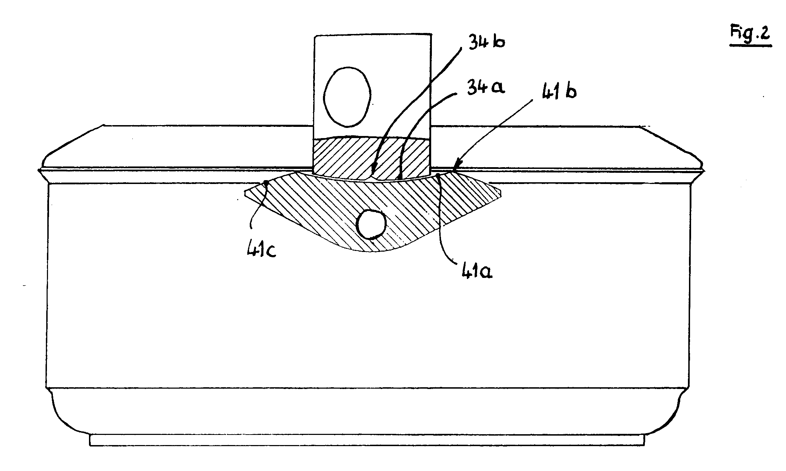

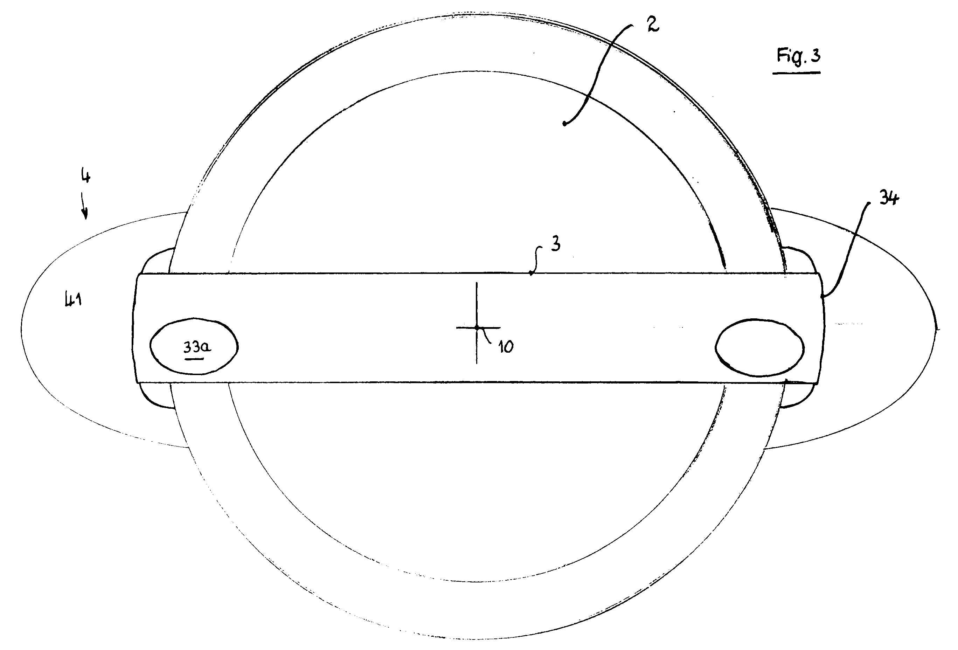

In den Fig. 2 und 5 sind eine an einer geschnittenen Stirnseite 34 (Fig. 3) des Deckelgriffes 3 konkave Kurvatur 34a und eine zu dieser komplementäre, konvexe Kurvatur 41a in dem Haltestück 41 zu sehen, die in der Schließstellung der Fig. 2 - zueinander parallel - einander nahe gelegen sind bzw. aneinander anliegen. In Fig. 3 ist diese Stellung durch Symmetrie der Gefäßgriffe 4 und des Deckelgriffes 3 untereinander und zu der Kontur des Kochgefäßes 1 und des Deckels 2 gekennzeichnet.

Die Kurvatur 41a endet an dem Haltestück 41 beiderseits jeweils in einer Rastkante 41b, die zusammen mit einer Rastkerbe 34b in der konkaven Kurvatur 34a eine Rastung 34b;41b für die Öffnungsstellung (Fig. 5) des Deckels 2 bildet. Dabei werden die Rastkanten 41b einfach durch zwei an die Kurvatur 41a symmetrisch anschließende, schräg-geneigte Seitenflächen 41c des Haltestückes 41 gebildet.

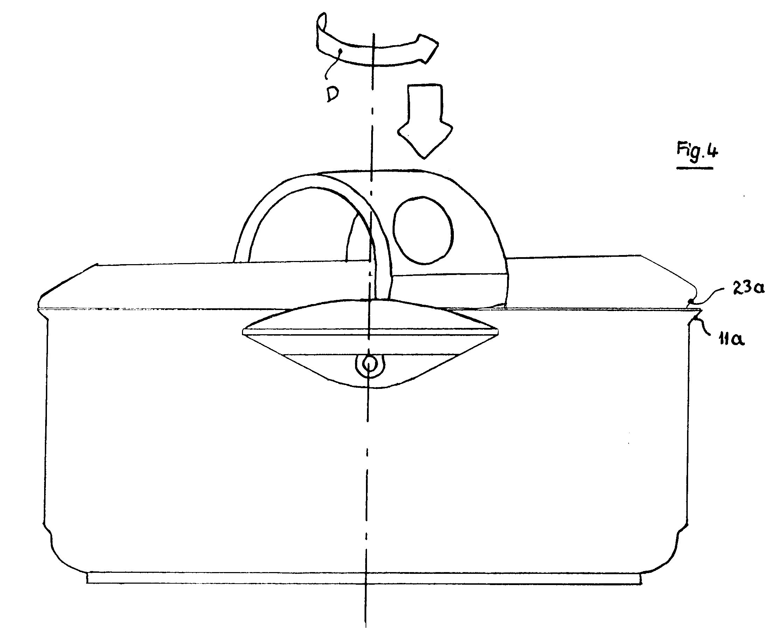

Senkrecht zur Drehrichtung D (Fig. 4 und Fig. 5) des Deckels 2 ist die Kurvatur 41a von keilförmigem Querschnitt Q1, der einem rillenförmigen Querschnitt Q2 der konvexen Kurvatur 34a flächenkomplementär ist. Die Enden der Querschnitte Q1 und Q2 sind gerundet mit solchen Rundungsradien, daß sie leicht aufeinander gleiten und die Kurvaturen 34a;41a nicht verklemmen können.

Besonders in der Fig. 3 ist gut zu erkennen, daß die Griffmulden 33a bzw. die Ausnehmungen 31 nicht mittig auf dem Deckelgriff 3 vorgesehen sind, sondern in der gleichen Richtung von der Symmetrieachse 10 vesetzt. Damit sind die mittig zwischen den Gefäßgriffen 4 befindlichen Hälften des Kochgefäßes 1 funktional verschieden. Da eine Bedienungsperson das Kochgefäß 1 stets mit der gleichen, durch die an den Gefäßgriffen 4 angreifenden Hände und die an den Griffmulden 33a anliegenden Daumen bedingten Orientierung hält, erfährt der Deckel 2 bei einer Drehung durch die Daumen ein Drehmoment um einen Drehpunkt, der auf der einen Seite von einem weiterhin an dem Schüttrand 11a anschlagenden Ringanschlag 23a gebildet wird; die andere Seite des Deckels 2 wird angehoben und bildet dort die gewünschte Öffnung des Kochgefäßes 1.

### Aufstellung der verwendeten Bezugszeichen:

- 1: Kochgefäß
- 10: Symmetrieachse
- 11: Gefäßwandung
- 11a: Schüttrand
- 11b: Randbereich
- 12: Gefäßboden
- 13: Rundung
- 14: Bodenplatte
- 2: Deckel
- 21: Deckelschale
- 22: Halterand
- 23: Deckelrand
- 23a: Ringanschlag
- 23b: Ringrand
- 3: Deckelgriff
- 31: Ausnehmung
- 32: Seite
- 33: Abdeckblech
- 33a: Griffmulde
- 34: Stirnseite
- 34a: Kurvatur
- 34b: Rastkerbe
- 4: Gefäßgriff
- 41: Haltestück
- 41a: Kurvatur
- 41b: Rastkante
- 41c: Seitenfläche
- 42: Ausnehmung
- 34b;41b: Rastung
- A: Außenkontur
- D: Drehrichtung
- I: Innenkontur
- Q1,Q2: Querschnitt
- R: Richtung

## Patentansprüche

1. Kochgefäß mit einem Deckel (2), wobei das Kochgefäß (1) aus einem Gefäßboden (12) und einer Gefäßwandung (11) besteht, die deckelseitig in einem Schüttrand (11a) endet, an welchen ein Deckelrand (23) des Deckels (2) anschlagend anlegbar ist, und mit einem Deckelgriff (3), wobei der Deckel (2) an der Gefäßwandung (11) aus einer das Kochgefäß (1) abschließenden Schließstellung in eine der Trennung flüssigen Kochgutes von festem Kochgut und/oder der Entlüftung des Kochgefäßes (1) dienende Öffnungsstellung von begrenztem Strömungsquerschnitt drehbar ist und der Deckelrand (23) aus einem Ringanschlag (23a) für das Anschlagen an dem Schüttrand (11a) und einem den Deckel (2) berandenden hohlzylindrischen Ringrand (23b) besteht, dessen Außenkontur (A) an der Innenkontur (I) der Gefäßwandung (11) in einem an den Schüttrand (11a) anschließenden Randbereich (11b) der Gefäßwandung (11) mit Spiel geführt ist, wenn der Deckel (2) auf das Kochgefäß (1) aufgesetzt ist,
dadurch gekennzeichnet, daß
(a) der Deckelgriff (3) sich an zwei gegenüberliegenden Seiten des Deckels (2) bis in den Bereich des Deckelrandes (23) erstreckt, so daß
(b) im Bereich des Deckelrandes (23) ausgebildete Stirnseiten (34) des Deckelgriffes (3) an je einem Gefäßgriff (4) anliegen, wenn der Deckel (2) auf das Kochgefäß (1) aufgelegt ist, und
(c) die Stirnseiten (34) des Deckelgriffes (3) und/oder der jeweilige an einer der Stirnseiten (34) anliegende Bereich des Gefäßgriffes (4) jeweils eine Kurvatur (34a;41a) aufweisen, die in einem von der Symmetrieachse (10) des Kochgefäßes (1) festen Abstand verläuft und so ausgebildet ist, daß der Deckel (2) bei einer Drehung um die Symmetrieachse (10) in deren Richtung (R) verschoben wird, wobei
(d) an dem Deckelgriff (3) Griffelemente oder dergleichen für eine Verdrehung des Deckels (2) so vorgesehen sind, daß dieser dabei von dem Deckelrand (23) abkippt.

2. Kochgefäß nach Anspruch 1, dadurch gekennzeichnet, daß die Kurvaturen (34a;41a) konkav und/oder konvex gekrümmt ausgebildet sind in der Weise, daß der Ringanschlag (23a) an dem Schüttrand (11a) anschlägt, wenn die Stirnseite (34) des Deckelgriffes (3) mittig an dem zugehörigen Gefäßgriff (4) anliegt.

3. Kochgefäß nach Anspruch 1 oder 2, dadurch gekennzeichnet, daß die Kurvaturen (34a;41a) mit einer Rastung (34b;41b) versehen sind, die bei einer Verdrehung des Deckels (2) aus seiner Schließstellung in seine Öffnungsstellung wirksam wird.

4. Kochgefäß nach Anspruch 3, dadurch gekennzeichnet, daß die konkave Kurvatur (34a) eine Rastkerbe (34b) aufweist und die konvexe Kurvatur (41a) von einer Rastkante (41b) berandet ist, die zusammen die Rastung (34b;41b) bilden.

5. Kochgefäß nach einem der Ansprüche 1 bis 4, dadurch gekennzeichnet, daß die Kurvaturen (34a;41a) einen in Drehrichtung (D) des Deckels (2) keilförmigen bzw. dazu passenden rillenförmigen Querschnitt (Q1;Q2) aufweisen.

6. Kochgefäß nach einem der Ansprüche 1 bis 5, dadurch gekennzeichnet, daß zwei an der Gefäßwandung (11) gegenüberliegende Gefäßgriffe (4) vorgesehen sind, an denen je eine Stirnseite (34) des Deckelgriffes (3) anlegbar ist.

7. Kochgefäß nach einem der Ansprüche 1 bis 6, dadurch gekennzeichnet, daß die Griffelemente als Griffmulden (33a) ausgebildet und so vorgesehen sind, daß eine solche Griffmulde (33a) von einer Bedienungsperson mit dem Daumen einer einen der Gefäßgriffe (4) fassenden Hand bequem erreichbar ist.

8. Kochgefäß nach Anspruch 7, dadurch gekennzeichnet, daß die Griffmulden (33a) außermittig zu der Symmetrieachse (10) so vorgesehen sind, daß bei ihrer Betätigung dem Deckel (2) ein Kippmoment eingeprägt wird in der Weise, daß auf der der Bedienungsperson zugewandten Seite des Kochgefäßes (1) der Ringanschlag (23a) in Kontakt mit dem Schüttrand (11a) verbleibt.

## Claims

1. A cooking vessel having a lid (2), the cooking vessel (1) being composed of a vessel base (12) and a vessel wall (11) whose end nearest the lid ends in a discharge edge (11a) against which a lid edge (23) of the lid (2) can be placed so as to strike thereagainst, and having a lid handle (3), the lid (2) being rotatable at the vessel wall (11) from a closing position in which the cooking vessel (1) is closed into an opening position of restricted flow cross-section which serves to separate liquid food to be cooked from solid food to be cooked and/or to vent the cooking vessel (1), and the lid edge (23) consisting of an annular stop (23a) to strike against the discharge edge (11a) and of a hollow-cylindrical annular edge (23b) which bounds the lid (2) and whose external contour (A) is, in a vessel-wall edge-region (11b) adjacent to the discharge edge (11a), guided with clearance on the internal contour (I) of the vessel wall (11) when the lid (2) is placed on the cooking vessel (1), characterised in that
(a) at two facing sides of the lid (2), the lid handle (3) extends right into the region of the lid edge (23), so that
(b) end faces (34) of the lid handle (3) which are in the region of the lid edge (23) each contact a respective vessel handle (4) when the lid (2) is placed on the cooking vessel (1), and
(c) the end faces (34) of the lid handle (3) and/or the respective vessel handle regions contacting the end faces (34) each have a curvature (34a; 41a) which runs at a fixed distance from the axis of symmetry (10) of the cooking vessel (1) and is such that upon rotation about the axis of symmetry (10), the lid (2) is displaced in the direction (R) of the latter,
(d) grip members or the like for rotation of the lid (2) being provided on the lid handle (3) in such a manner that in the process the lid (2) tilts away from the lid edge (23).

2. A cooking vessel in accordance with Claim 1, characterised in that the curvatures (34a; 41a) are concavely and/or convexly curved in such a way that the annular stop (23a) strikes against the discharge edge (11a) when the end face (34) of the lid handle (3) contacts the centre of the associated vessel handle (4).

3. A cooking vessel in accordance with Claim 1 or 2, characterised in that the curvatures (34a; 41a) are provided with a locking device (34b; 41b) which becomes operative when the lid (2) is rotated from its closing position into its opening position.

4. A cooking vessel in accordance with Claim 3, characterised in that the concave curvature (34a) has a locking notch (34b) and the convex curvature (41a) is bounded by a locking corner (41b), these together forming the locking device (34b; 41b).

5. A cooking vessel in accordance with any one of Claims 1 to 4, characterised in that the cross-sections (Q1; Q2) of the curvatures (34a; 41a) are wedge-shaped and of corresponding groove-shape respectively in the direction of rotation (D) of the lid (2).

6. A cooking vessel in accordance with any one of Claims 1 to 5, characterised in that two facing vessel handles (4) are provided on the vessel wall (11) and respective end faces (34) of the lid handle (3) can be placed thereon.

7. A cooking vessel in accordance with any one of Claims 1 to 6, characterised in that the grip members are recessed grips (33a) and are provided in such a manner that such a recessed grip (33a) can be reached easily by an operator using the thumb of a hand grasping one of the vessel handles (4).

8. A cooking vessel in accordance with Claim 7, characterised in that the recessed grips (33a) are arranged off-centre in relation to the axis of symmetry (10) in such a manner that upon manipulation thereof, the lid (2) is given a tilting moment in such a way that on the side of the cooking vessel (1) facing the operator, the annular stop (23a) remains in contact with the discharge edge (11a).

## Revendications

1. Récipient de cuisson comportant un couvercle (2), le récipient de cuisson (1) étant composé d'un fond (12) de récipient et d'une paroi (11) de récipient, qui se termine du côté du couvercle par un bord verseur (11a), contre lequel on peut appliquer un bord (23) de couvercle du couvercle (2), et comportant une poignée (3) de couvercle, le couvercle (2) pouvant être tourné sur la paroi (11) de récipient d'une position de fermeture fermant le récipient de cuisson (1) à une position d'ouverture, de section d'écoulement limitée, servant à la séparation du produit à cuire liquide du produit à cuire solide et/ou à l'aération du récipient de cuisson (1) et le bord (23) du couvercle étant composé d'une butée annulaire (23a) pour la mise en butée sur le bord verseur (11a) et d'un bord annulaire (23b) cylindrique creux bordant le couvercle (2), dont le contour extérieur (A) est guidé avec du jeu sur le contour intérieur (I) de la paroi (11) du récipient dans une zone de bord (11b) se raccordant au bord verseur (11a), lorsque le couvercle (2) est posé sur le récipient de cuisson (1),
caractérisé en ce que,
(a) la poignée (3) de couvercle s'étend entre deux côtés opposés du couvercle (2) jusque dans la zone du bord (23) du couvercle, de sorte que
(b) les extrémités (34) de la poignée (3) de couvercle formées dans la zone du bord (23) de couvercle s'appliquent sur chacune des poignées (4) de couvercle, lorsque le couvercle (2) est appliqué sur le récipient de cuisson (1), et
(c) les extrémités (34) de la poignée (3) de couvercle et/ou la zone respective du couvercle (4) de récipient voisine d'une des extrémités (34) présentent respectivement une courbure (34a; 41a), qui est placée à une distance fixe de l'axe de symétrie (10) du récipient de cuisson (1) et a une forme telle que le couvercle (2), lors d'une rotation autour de l'axe de symétrie (10), est déplacé dans la direction (R) de cet axe,
(d) des éléments de saisie ou analogues sont prévus sur la poignée (3) du couvercle pour faire tourner le couvercle (2) de telle sorte que celui-ci bascule alors en s'écartant du bord (23) du couvercle.

2. Récipient de cuisson selon la revendication 1, caractérisé en ce que les courbures (34a;41a) sont concaves et/ou convexes de telle manière que la butée annulaire (23a) s'appuie sur le bord verseur (11a), lorsque l'extrémité (34) de la poignée (3) de couvercle se trouve au milieu de la poignée (4) de récipient correspondante.

3. Récipient de cuisson selon la revendication 1 ou 2, caractérisé en ce que les courbures (34a;41a) sont pourvues d'un crantage (34a;41b), qui agit lors d'une rotation du couvercle (2) de sa position de fermeture à sa position d'ouverture.

4. Récipient de cuisson selon la revendication 3, caractérisé en ce que la courbure concave (34a) comporte une encoche d'arrêt (34b) et la courbure convexe (41a) est bordée par une arête d'arrêt (41b), qui constituent ensemble le crantage (34b;41b).

5. Récipient de cuisson selon l'une des revendications 1 à 4, caractérisé en ce que les courbures (34a;41a) présentent, dans la direction de rotation (D) du couvercle (2), une section transversale (Q1;Q2), l'une en forme de coin et l'autre en forme de gorge s'adaptant à celle-ci.

6. Récipient de cuisson selon l'une des revendications 1 à 5, caractérisé en ce que sont prévues, sur la paroi du récipient (11), deux poignées (4) de récipient opposées, à chacune desquelles on peut appliquer une extrémité (34) de la poignée (3) de couvercle.

7. Récipient de cuisson selon l'une des revendications 1 à 6, caractérisé en ce que les éléments de saisie ont la forme de poignée concave (33a) et sont prévus de telle manière qu'un telle poignée concave (33a) puisse être atteinte facilement par un utilisateur avec le pouce d'une main qui saisit une des poignées (4) de récipient.

8. Récipient de cuisson selon la revendication 7, caractérisé en ce que les poignées concaves (33a) sont prévues excentrées par rapport à l'axe de symétrie (10) de telle manière que, lorsqu'on les actionne, un couple de basculement est appliqué au couvercle (2) de telle manière que, du côté du récipient de cuisson (1) tourné vers l'utilisateur, la butée annulaire (23a) reste en contact avec le bord verseur (11a).
